(19) Europäisches Patentamt / European Patent Office / Office européen des brevets

(11) EP 3 334 562 B1

(12) EUROPEAN PATENT SPECIFICATION

(45) Date of publication and mention of the grant of the patent:
**25.12.2019 Bulletin 2019/52**

(21) Application number: **16753691.1**

(22) Date of filing: **10.08.2016**

(51) Int Cl.:
**B23Q 17/22** (2006.01)    **B24B 5/42** (2006.01)
**B24B 19/12** (2006.01)    **B24B 49/00** (2012.01)

(86) International application number:
**PCT/GB2016/052477**

(87) International publication number:
**WO 2017/025739 (16.02.2017 Gazette 2017/07)**

(54) **GRINDING ERROR COMPENSATION**

SCHLEIFFEHLERKOMPENSIERUNG

COMPENSATION D'ERREUR DE MEULAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2015 GB 201514154**

(43) Date of publication of application:
**20.06.2018 Bulletin 2018/25**

(73) Proprietor: **Fives Landis Limited**
**Keighley, Yorkshire BD20 7SD (GB)**

(72) Inventors:
• **CLEWES, Stuart**
**Keighley**
**Yorkshire BD20 7SD (GB)**

• **FALKNER, Dermot**
**Keighley**
**Yorkshire BD20 7SD (GB)**

(74) Representative: **Sharrock, Daniel John et al**
**Nash Matthews LLP**
**24 Hills Road**
**Cambridge CB2 1JP (GB)**

(56) References cited:
**EP-A2- 2 463 737       GB-A- 2 321 026**
**GB-A- 2 360 475        JP-A- 2001 179 587**
**US-A- 5 373 222        US-A1- 2009 271 027**
**US-A1- 2013 123 982**

## Description

### Field of the invention

This invention relates to a machine tool and method of operation thereof

### Background to the invention

Abrasive machining processes for grinding the working surfaces of crankshafts originally used tooling with a headstock (workhead) and a footstock which gripped the post end and flange end of the crankshaft with moveable jaws which could arrange for any of the main journal bearings or crankpin bearing surfaces to rotate about a reference axis through the centre of the workhead and footstock (see US6026549A).

Improvements in computer numerical control (CNC) cylindrical grinding machines have enabled a process to be implemented where the position of the infeed machine axis (or grinding machine axis) of a grinding wheel or other grinding tool is accurately controlled and synchronized to the orbital motion of parts of a rotating workpiece. Main journal bearings are ground cylindrically, as before, to their finished size whilst rotating about a centre line that corresponds with the axis of the workpiece. The orbiting crankpins are now also able to be ground without the need to displace the centre of rotation of the workpiece, thus simplifying the mechanical arrangement for clamping the workpiece between centres in the headstock and footstock. The infeed equation for controlling the infeed position P of the grinding wheel relating to the workpiece to compensate for differences in vertical height H between the crankshaft workpiece reference axis and the grinding wheel machine axis (assuming infeed movement of the grinding wheel axis in a horizontal direction) is described in GB2360475 as:

$$P = (T^*\cos A) + \sqrt{\{ (R+r)^2 - ( (T^*\sin A) + H )^2 \}}$$

where:

P is the demand position value for each angular position of the workpiece,
R is the current radius of the grinding wheel,
r is the target radius for the crankpin,
T is the throw of the crankpin around the main crankshaft axis,
H is the vertical height between the two axes (the workpiece axis and the grinding wheel axis) (the height error), and
A is the angle of rotation of the workpiece, measured in the direction of rotation of the workpiece around its main axis from a start position.

It can be seen that the infeed axis demand positions, P, can be calculated to ensure that the point of contact between the grinding wheel and workpiece directly correlates with the rotation of the headstock. The machine systems which support the orbital grinding processes have become very repeatable and it has been possible to provide post process roundness error measurements which can be fed back to the original machine tool to improve the roundness accuracy of subsequent ground parts. The repeatability is such that roundness errors on automotive and truck crankshafts are regularly manufactured in production to tolerance levels below 3 microns.

This infeed equation takes into account the fixed difference in height between the horizontal plane that contains the infeed machine axis (i.e. the grinding machine axis) and the horizontal plane that contains the centerline between the headstock and footstock, i.e. the workhead machine axis. In GB 2360475, the height difference was considered to be fixed and measurable at the time of manufacture of the machine tool. The ratio of variation was originally stated as 100:1 using crankshaft and machine dimensions typical for the particular grinding machine used where 100 micron height change would only produce a 1 micron roundness error. However, it has since been found experimentally that errors of as much as 4 microns have been observed for a height variation of 100 microns.

The machine tools used to grind crankshafts are required to operate unattended in ambient conditions that can vary from high daytime temperatures in excess of 30 degrees Celsius to night time temperatures as low as 5 degrees Celsius. Modern machine building practices pay some considerable degree of attention to temperature control of the machine tool and its fluid delivery systems and the mechanical design of the wheelhead and workhead assemblies to accurately maintain the location of the planes which include the axis of rotation of the wheelhead and the axis of rotation of the workpiece. Despite this, it has been found that height variations of 20 microns during production of workpieces through a 24 hour period are not uncommon. A major source of heat, and therefore a cause of height instability, can be found in the friction loss associated with the wheelspindle bearings. Such heat can cause the wheelspindle pod to locally reach temperatures at least 20 degrees greater than the surrounding component parts of the machine and in particular the headstock and footstock assemblies. The local temperature rise of the wheelspindle structure causes normal thermal expansion that moves the centre of rotation of the wheelspindle with respect to the surrounding elements of the machine. To date, the method of compensation of height variation to improve the roundness of the workpiece is reliant on post process roundness measurement combined with the repeatability of the process and the machine tool over the varying temperature range. The degree of repeatability of the process embodied in high performance crankshaft grinding machines has now become an important limitation in the reduction of roundness errors on workpieces and in particular the variability in the roundness errors of orbiting crankpin diameters.

The following documents provide examples of error compensation in machine tools. JP2001-179587 represents the closest prior art to the subject-matter of claim 1 and is the basis for its preamble. It describes a method for grinding a crankpin of a crankshaft which takes into account tool wear. GB2321026 relates to a method of controlling a machine tool to form a workpiece using a material-removing component, wherein the method compensates for differences between measured positions and corresponding theoretical positions of the component. US2009/0271027 concerns a turning machine which includes a displacement sensor for measuring a distance which reflects the positional displacement of a tool. EP2463737 provides a method for compensating for thermal displacements on a machine tool, in which a main spindle is moved into or through a measuring position in which the position of the main spindle relative to a coordinate origin is determined.

In this specification, the term "machine axis" denotes a physical machine axis as opposed to a notional reference axis. Each machine axis has two portions which are driven in use to move relative to each other, about or along a notional reference axis, by associated drive arrangements governed by a control arrangement.

Summary of the invention

The present invention is directed at a machine tool comprising:

a workpiece support;
a tool support; and
an infeed arrangement for causing relative movement in an infeed direction between the workpiece support and the tool support.

According to the invention, the machine tool includes a metrology surface rigidly fixed relative to one of the workpiece support and the tool support;

a position probe carried by the other of the workpiece support and the tool support; and
a processor configured to calculate a height measure relating to the relative spacing in a direction perpendicular to the infeed direction of the workpiece support and the tool support based on interaction between the position probe and the metrology surface as a result of relative movement in the infeed direction between the workpiece support and the tool support caused by the infeed arrangement,
wherein the metrology surface comprises a planar surface that is inclined with respect to the infeed direction.

The infeed direction is normally in a horizontal direction, in which case the calculated spacing between the workpiece support and the tool support is a vertical direction, thus representing relative heights. For simplicity, the present specification refers to horizontal, horizontal plane, vertical, vertical height and height measure based on this assumption, but it is to be understood that the infeed direction may be inclined with respect to horizontal.

The invention enables determination of variations in the height measure, e.g. the actual height difference between the workpiece support and the tool support, as a machining operation progresses. This measurement may be taken at regular time intervals, which may typically be every 20 minutes, or more frequently during known conditions of rapid temperature change such as occur during process start up. This height measure may be used to improve the accuracy of control of the location of the tool relative to the workpiece as the relative height varies in use, for example as a result of temperature changes. In particular, the height measure may be used in regulation of the infeed arrangement.

In a further aspect, the invention provides a method of operation of a machine tool in accordance with the invention, comprising calculating the height measure at time intervals during operation, and regulating the infeed arrangement in response to the calculated height measures.

In particular, variations in the height measure with time can be determined.

This invention finds particular application in grinding machines, particularly orbital grinding machines, for grinding of workpieces such as crankpins and the cam regions of camshafts, where a grinding tool such as a grinding wheel performing the grinding is moved, typically under computer control, towards and away from the axis about which a workpiece is rotating so as to maintain engagement with the surface thereof which is to be ground, as the workpiece rotates around its main axis, such as in the case of a crankpin which precesses around the main crankshaft axis, as the latter rotates, e.g. as disclosed in GB 2360475. This is of particular benefit in grinding machines (or other machine tools) having one or more horizontal machine axes but lacking a vertical machine axis.

In particular, the calculated height measure, particularly variations therein, can be used in the infeed equation given above to determine the infeed position P of a grinding wheel using the actual value of H in use (which possibly varies with time) in place of an initially determined value, leading to greater accuracy.

The workpiece support typically comprises a headstock and a footstock with axially aligned centres defining a workpiece reference axis that is typically horizontal.

The tool support typically comprises a support for a grinding tool such as a grinding wheel, arranged for rotation about a grinding reference axis that is typically horizontal.

The workpiece axis and grinding axis are typically in approximately the same horizontal plane.

The infeed arrangement is typically arranged to cause movement of the tool support towards and away from the workpiece support during a machining, e.g. grinding, operation, typically in a horizontal direction.

The metrology surface is preferably fixed with respect to the workpiece support, with the position probe carried by the tool support.

The position probe may be fixed to a location assembly carried by the tool support, with the location assembly (and probe) being vertically movable with respect to the tool support. During a machining operation, the location assembly is moved vertically, typically raised, to a retracted position, to be clear of the machining operation. When required for use, the location assembly is moved vertically, typically lowered, to a calibration position, e.g. determined by contact with a location surface that accurately constrains the probe with respect to a datum position with respect to the tool support on which it is carried.

The metrology surface preferably comprises a planar surface that is inclined with respect to horizontal, conveniently at an angle of at least 3°. The angle of inclination is desirably less than 8°, and is preferably 5° or about 5°. The angle of inclination may be chosen to provide good sensitivity to the variation in height likely to occur in use whilst providing a surface that can accurately and reliably interact with the position probe. The metrology surface is preferably accurately ground to the desired form with high precision.

The metrology surface may form part of a datum block. The datum block may be of tapered form, having a horizontal lower face and an upper inclined metrology surface.

The datum block may incorporate additional reference surfaces, e.g. one or more accurately formed horizontal and vertical surfaces that may be used for other location purposes, e.g. to enable determination of the lateral or angular location of workpiece features, as well as calibration of wheel dressing reference edges.

The position probe preferably comprises a touch sensitive position probe that is responsive to contact between the probe and a reference surface.

The position probe may trigger the acquisition of machine axis positions when its probe tip touches another part of the machine which could be the workpiece or a reference surface of a datum block. The machine axis probe touch data may be derived from measuring scales that determine the machine axis positions which are in the plane of operation of the machine (typically a horizontal plane). No measurement of the location of the probe position in a direction perpendicular to the plane of operation of the machine (typically vertically) is normally available as there usually is no machine axis and corresponding measuring scale in this direction. Use of an inclined metrology surface enables derivation of variations in this perpendicular direction, and thus of height variations, even in machines lacking such a vertical machine axis.

The machine tool suitably additionally comprises a machine controller, typically a computer control arrangement, for controlling operation of at least the infeed arrangement, and typically also other components of the tool.

A machine tool and method of operation thereof are disclosed whereby a metrology surface formed on a component of the machine tool is rigidly fixed relative to one of a workpiece support and a tool support, such that the metrology surface can be probed using a position probe rigidly fixed relative to the other of the workpiece support and the tool support.

The positions of the workpiece and tool supports at which the position probe contacts the metrology surface may be used to calculate a measure relating to the height between reference points or axes of the workpiece support and tool support (such as a tool infeed arrangement). This height measure may be used by a controller of the machine to improve the accuracy of its control of the location of the tool relative to the workpiece.

A machine tool and method of operation thereof are disclosed whereby a tapered metrology surface may be rigidly fixed to the machine structure which carries the workpiece such that its surface can be probed using a touch sensitive position probe carried by the grinding infeed axis. The variation in the position where the grinding infeed axis senses the location of the tapered surface may be used to calculate the variation in height between the planes which contain the workpiece axis and the wheelhead axis. The measure of height may be included in the calculations of infeed position of the grinding wheel to improve the roundness of the orbiting workpieces during grinding.

The crankpin roundness variability may be reduced by employing a method to exactly characterize the height variation between the planes that include the workpiece axis and the wheelfeed axis. Such a mechanism may be capable of determining the relative location of the planes irrespective of any variation in the ambient temperature changes that might detrimentally affect the accuracy of its gauging components. The machine axes may not include any movement or operation which is perpendicular to the planes which contain either the workpiece axis or the wheelhead axis. Although the measurement of the height variation could be achieved by adding a dedicated metrology axis, it is preferable to infer the height variation using the existing machine axes.

The method used in the invention to determine the variation in height may be uncomplicated and robust. The existing machine systems may not need any modification to allow the touch information to be acquired to calculate any change in relative height between the two planes that carry the workpiece and either of the two wheelheads.

The invention will now be described, by way of illustration, with reference to the accompanying drawings, in which:

Figure 1 is a diagram illustrating use of an inclined surface to determine a change in height;

Figure 2 is a perspective view of part of a twin wheelhead crankshaft grinding machine in accordance with the present invention;

Figure 3 is an alternative perspective view, to an enlarged scale, of part of the machine of Figure 2, with a touch position probe in a retracted position;

Figure 4 is a view similar to Figure 3, with the probe in a calibration position;

Figure 5 is a schematic perspective view of the datum block of the machine of Figures 1 to 4; and

Figure 6 is a schematic perspective view of an alternative example of a datum block suitable for use in a machine tool in accordance with the invention.

Detailed description

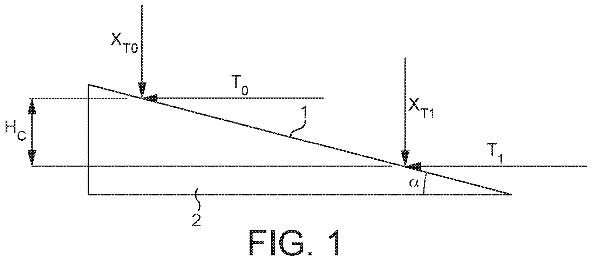

A diagram illustrating use of an inclined metrology surface 1 of a height measurement block 2 to determine a change in height ($H_c$) is shown in Figure 1, where:

$$\text{change in height} = (X_{T0} - X_{T1}) * \tan \alpha.$$

$X_{T0}$ is the height in the X direction (vertical) at touch position $T_0$,

$X_{T1}$ is the height in the X direction at touch position $T_1$, and

$\alpha$ is the angle of inclination of the measurement surface with respect to horizontal of the inclined measurement surface.

It can be seen that the touch position in the X direction needs to be stable and not subjected to sources of error. Such errors could include distortion of the machine bed caused by thermal gradients and thermal changes to the calibration of the linear machine axis encoder. The height measurement block can incorporate a perpendicular face (relative to a horizontal reference plane of the machine) which could be used as a reference for the infeed machine axis which can be measured and would be independent of the height variations. Any calibration error could be subtracted from the touch position differences to allow for some compensation of first order errors in the touch position data, i.e.:

$$\text{change in height} = (X_{T0} - X_{T1} - X[\text{vertical face position change}]) * \tan \alpha.$$

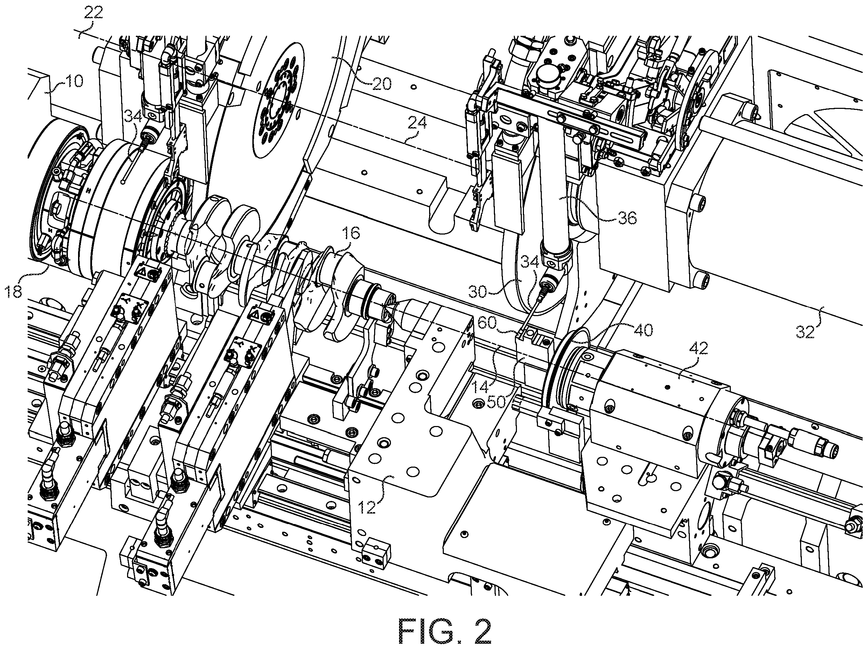

Figure 2 shows a view of the major components of a twin wheelhead crankshaft grinding machine according to an example of the present invention.

The machine comprises a workpiece support having a headstock 10 and a footstock 12 with axially aligned centres defining a workpiece reference axis 14, with a workpiece (crankshaft) 16 clamped between the headstock and footstock centres and driven by a workhead 18 through a chuck.

The machine further includes a left hand grinding wheel 20 mounted on a left hand wheelhead 22 (tool support) for rotation about a left hand wheelhead reference axis 24, and a right hand grinding wheel 30 mounted on a right hand wheelhead 32 (tool support) for rotation about a right hand wheelhead reference axis (not shown). Each wheelhead carries a touch probe 34 rigidly fixed with respect to a location assembly 36 mounted for movement in a vertical direction.

A dresser wheel 40 is mounted on a dresser spindle 42 for dressing the grinding wheel.

A datum block 50 is rigidly fixed with respect to the machine structure, adjacent the dresser spindle 42, to be fixed in position relative to the headstock 10 and hence with respect to the workpiece reference axis 14 in use.

The workpiece reference axis 14 is located at a similar height to the wheelhead reference axes, with the grinding wheel performing the grinding being moved, in use, in an infeed direction by an infeed arrangement (or infeed machine axis) towards and away from the workpiece reference axis so as to maintain engagement of the grinding wheel with the surface of the workpiece that is being ground as the workpiece rotates around its axis, such as in the case of a crankpin which precesses around the main crankshaft axis as the latter rotates. Generally the movement of the grinding wheel relative to the workpiece is in a horizontal plane with the workpiece reference axis 14 and wheelhead reference axes being parallel to each other and extending horizontally, and the following description assumes this.

A CNC machine controller (not shown) controls operation of the various components of the machine.

The datum block 50 comprises a solid block of metal 52 precision ground to include a vertical front datum face 54 (perpendicular to a horizontal reference plane of the machine and a reference surface 58) and two raised vertical datum faces 56 which are normally used to assist with datum procedures for the dressing wheel and grinding wheels. The block includes an inclined planar face 60 that is accurately ground flat to be inclined at an angle of 5° relative to the horizontal face 58, with the block 52 thus being tapered to provide inclined metrology touch surface 60. The upper surface of the block includes two troughs 62 to ensure clearance when the touch probe contacts the vertical faces of the block.

The datum block 50 is shown in Figures 2 to 4 located in its usual position adjacent to the dresser spindle 42.

The datum block 50 enables the location of the dresser wheel 40 to be determined with reference to the location of either of the wheelfeed machine axes and the grinding wheel working surfaces.

The touch probes 34 carried by the wheelheads 22 and 32 are used both at set up for machine datums and during the grinding process for lateral location of the workpiece. When the tip of the touch probe strikes a fixed machine surface in either of the two CNC controlled horizontal directions (machine axes), the touch probe generates a signal which causes the CNC controller to record the actual machine axis positions. The logged positions are then used to process either workpiece or machine position data.

In use of the machine for grinding a crankshaft 16, the height difference H between the workpiece reference axis and the wheelhead reference axis as determined initially during manufacture of the machine is used in the initial machine calibration process to set the offsets in the infeed calculation algorithm, as described in GB 2360475, and as discussed above.

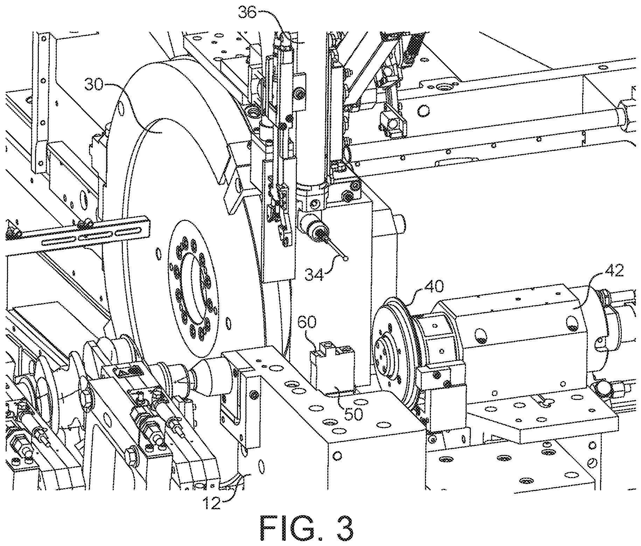

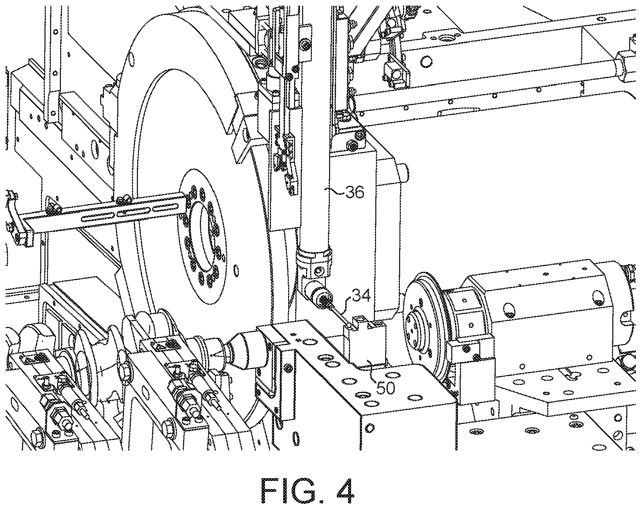

During a grinding operation, the location assembly 36 (and probe 34) are raised to a retracted position, to be clear of the grinding, as shown in Figure 3. When the probe is required for calibration purposes, the location assembly 36 (and probe 34) are lowered to a calibration position in which the probe arm contacts a location surface which accurately constrains the probe to a datum position with respect to the wheelhead 32 by which it is carried. The probe is then advanced horizontally by the infeed machine axis until the probe tip contacts the inclined face 60 of the datum block, as shown in Figure 4.

The height difference is determined in this way at time intervals during a grinding operation, typically every 20 minutes or more frequently during known conditions of rapid temperature change such as occur during process start up. Any change in height is determined as described above, with reference to Figure 1. The newly determined height difference H is then used in the infeed calculation algorithm.

The front face 54 of the tapered block 50 may be additionally ground to be used as a reference face for the touch probe, or one of several existing datum faces could be used.

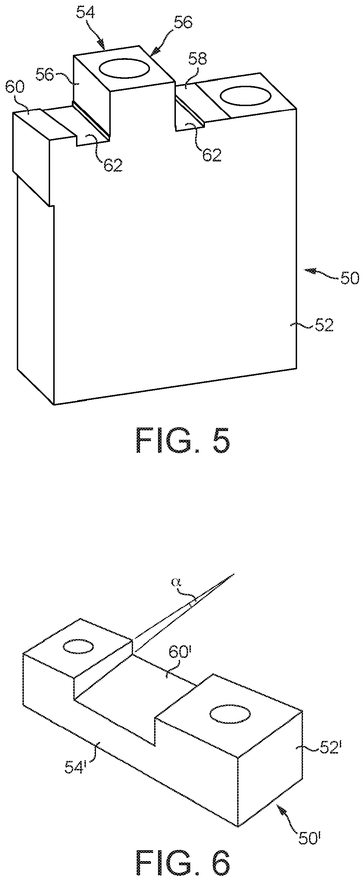

Figure 5 is a schematic view of an alternative, simplified datum block 50' suitable for use in the present invention. Figure 6 is a perspective view, from a direction rotated approximately 180° from that of Figure 2.

From the present disclosure, many other modifications and variations will be apparent to persons skilled in the art. Such modifications and variations may involve other features which are already known in the art and which may be used instead of or in addition to features already disclosed herein It should be understood that the scope of the present invention is defined by the appended claims.

**Claims**

1. A machine tool comprising:

   a workpiece support (10, 12);
   a tool support (22, 32); and
   an infeed arrangement for causing relative movement in an infeed direction between the workpiece support and the tool support,

**characterised in that** the machine tool includes:

a metrology surface (60) rigidly fixed relative to one of the workpiece support (10, 12) and the tool support (22, 32);

a position probe (34) carried by the other of the workpiece support and the tool support; and

a processor configured to calculate a height measure relating to the relative spacing in a direction perpendicular to the infeed direction of the workpiece support and the tool support based on interaction between the position probe and the metrology surface as a result of relative movement in the infeed direction between the workpiece support and the tool support caused by the infeed arrangement,

wherein the metrology surface (60) comprises a planar surface that is inclined with respect to the infeed direction.

2. A machine tool according to claim 1, wherein the metrology surface (60) is fixed with respect to the workpiece support (10, 12), with the position probe (34) carried by the tool support (22, 32).

3. A machine tool according to claim 1 or 2, wherein the angle of inclination is at least 3°.

4. A machine tool according to any one of the preceding claims, wherein the angle of inclination is less than 8°.

5. A machine tool according to claim 1 or 2, wherein the angle of inclination is 5°.

6. A machine tool according to any one of the preceding claims, wherein the metrology surface (60) forms part of a datum block (50).

7. A machine tool according to claim 6, wherein the datum block (50) incorporates additional reference surfaces.

8. A machine tool according to any one of the preceding claims, wherein the position probe (34) comprises a touch sensitive position probe that is responsive to contact between the probe and a reference surface.

9. A machine tool according to any one of the preceding claims, comprising an orbital grinding machine.

10. A machine tool according to claim 9, wherein the infeed arrangement is arranged to be operated in accordance with an infeed equation:

$$P = (T*\cos A) + \sqrt{\{(R+r)^2 - ((T*\sin A) + H)^2\}}$$

where:

P is the demand position value for each angular position of a crankshaft workpiece,
R is the current radius of a grinding wheel,
r is the target radius for a crankpin,
T is the throw of the crankpin around the main crankshaft axis,
H is the vertical height between the workpiece axis and the grinding wheel axis based on the height measure calculated by the processor, and
A is the angle of rotation of the workpiece, measured in the direction of rotation of the workpiece around its main axis from a start position.

11. A method of operation of a machine tool in accordance with any one of the preceding claims, comprising calculating the height measure at time intervals during operation, and regulating the infeed arrangement based on the calculated height measure.

**Patentansprüche**

1. Werkzeugmaschine, umfassend:

einen Werkstückträger (10, 12),

einen Werkzeugträger (22, 32) und

eine Zustellanordnung zum Bewirken einer Relativbewegung in einer Zustellrichtung zwischen dem Werkstückträger und dem Werkzeugträger,

**dadurch gekennzeichnet, dass** die Werkzeugmaschine Folgendes beinhaltet:

eine Messfläche (60), die relativ zu entweder dem Werkstückträger (10, 12) oder dem Werkzeugträger (22, 32) starr fixiert ist,

eine von dem jeweils anderen des Werkstückträgers und des Werkzeugträgers gehaltene Positionssonde (34) und einen Prozessor, der dafür konfiguriert ist, ein Höhenmaß bezüglich der Relativbeabstandung in einer Richtung senkrecht zu der Zustellrichtung des Werkstückträgers und des Werkzeugträgers basierend auf Interaktion zwischen der Positionssonde und der Messfläche als Resultat einer durch die Zustellanordnung bewirkten Relativbewegung in der Zustellrichtung zwischen dem Werkstückträger und dem Werkzeugträger zu berechnen,

wobei die Messfläche (60) eine planare Fläche umfasst, die in Bezug auf die Zustellrichtung geneigt ist.

2. Werkzeugmaschine nach Anspruch 1, wobei die Messfläche (60) in Bezug auf den Werkstückträger (10, 12) fixiert ist, wobei die Positionssonde (34) durch den Werkzeugträger (22, 32) gehalten wird.

3. Werkzeugmaschine nach Anspruch 1 oder 2, wobei der Neigungswinkel mindestens 3° beträgt.

4. Werkzeugmaschine nach einem der vorhergehenden Ansprüche, wobei der Neigungswinkel weniger als 8° beträgt.

5. Werkzeugmaschine nach Anspruch 1 oder 2, wobei der Neigungswinkel 5° beträgt.

6. Werkzeugmaschine nach einem der vorhergehenden Ansprüche, wobei die Messfläche (60) einen Teil einer Passleiste (50) bildet.

7. Werkzeugmaschine nach Anspruch 6, wobei die Passleiste (50) zusätzliche Bezugsflächen beinhaltet.

8. Werkzeugmaschine nach einem der vorhergehenden Ansprüche, wobei die Positionssonde (34) eine berührungsempfindliche Positionssonde umfasst, die auf Kontakt zwischen der Sonde und einer Bezugsfläche anspricht.

9. Werkzeugmaschine nach einem der vorhergehenden Ansprüche, umfassend eine kreisförmige Schleifmaschine.

10. Werkzeugmaschine nach Anspruch 9, wobei die Zustellanordnung dafür eingerichtet ist, gemäß einer Zustellgleichung betrieben zu werden:

$$P = (T*\cos A) + \sqrt{(R + r)^2 - ((T*\sin A) + H)^2}$$

wobei:

P der Bedarfspositionswert für jede Winkelposition eines Kurbelwellenwerkstücks ist,

R der aktuelle Radius einer Schleifscheibe ist,

r der Sollradius für eine Kurbelwelle ist,

T die Kröpfung der Kurbelwelle um die Hauptkurbelwellenachse ist,

H die vertikale Höhe zwischen der Werkstückachse und der Schleifscheibenachse basierend auf dem durch den Prozessor gemessenen Höhenmaß ist und

A der in Drehrichtung des Werkstücks um dessen Hauptachse von einer Startposition aus gemessene Drehwinkel des Werkstücks ist.

11. Verfahren zum Betrieb einer Werkzeugmaschine nach einem der vorhergehenden Ansprüche, umfassend ein Berechnen des Höhenmaßes in Zeitintervallen während des Betriebs und Regeln der Zustellanordnung basierend auf dem berechneten Höhenmaß.

**Revendications**

1.  Machine-outil comprenant :

    un support de pièce à usiner (10, 12) ;
    un support d'outil (22, 32) ; et
    un agencement d'introduction pour provoquer un mouvement relatif dans une direction d'introduction entre le support de pièce à usiner et le support d'outil,
    **caractérisée en ce que** la machine-outil comprend :

    une surface de métrologie (60) fixée de manière rigide par rapport à l'un du support de pièce à usiner (10, 12) et du support d'outil (22, 32) ;
    une sonde de position (34) portée par l'autre du support de pièce à usiner et du support d'outil ; et
    un processeur configuré pour calculer une mesure de hauteur relative à l'espacement relatif dans une direction perpendiculaire à la direction d'introduction du support de pièce à usiner et du support d'outil sur la base de l'interaction entre la sonde de position et la surface de métrologie résultant du mouvement relatif dans la direction d'introduction entre le support de pièce à usiner et le support d'outil provoqué par l'agencement d'introduction,
    la surface de métrologie (60) comprenant une surface plane qui est inclinée par rapport à la direction d'introduction.

2.  Machine-outil selon la revendication 1, la surface de métrologie (60) étant fixée par rapport au support de pièce à usiner (10, 12), avec la sonde de position (34) portée par le support d'outil (22, 32).

3.  Machine-outil selon la revendication 1 ou 2, l'angle d'inclinaison étant d'au moins 3°.

4.  Machine-outil selon l'une quelconque des revendications précédentes, l'angle d'inclinaison étant inférieur à 8°.

5.  Machine-outil selon la revendication 1 ou 2, l'angle d'inclinaison étant de 5°.

6.  Machine-outil selon l'une quelconque des revendications précédentes, la surface de métrologie (60) faisant partie d'un bloc de référence (50).

7.  Machine-outil selon la revendication 6, le bloc de référence (50) incorporant des surfaces de référence supplémentaires.

8.  Machine-outil selon l'une quelconque des revendications précédentes, la sonde de position (34) comprenant une sonde de position sensible au toucher qui est sensible au contact entre la sonde et une surface de référence.

9.  Machine-outil selon l'une quelconque des revendications précédentes, comprenant une meuleuse orbitale.

10. Machine-outil selon la revendication 9, l'agencement d'introduction étant agencé pour fonctionner conformément à une équation d'introduction :

$$P = (T*\cos A) + \sqrt{(R+r)^2 - ((T*\sin A)+H)^2}$$

    P étant la valeur de position requise pour chaque position angulaire d'une pièce à usiner de vilebrequin,
    R étant le rayon actuel d'une meule,
    r étant le rayon cible d'un maneton,
    T étant la portée du vilebrequin autour de l'axe principal de vilebrequin,
    H étant la hauteur verticale entre l'axe de la pièce à usiner et l'axe de la meule sur la base de la mesure de hauteur calculée par le processeur, et
    A étant l'angle de rotation de la pièce à usiner, mesuré dans la direction de rotation de la pièce à usiner autour de son axe principal depuis une position de départ.

11. Procédé de fonctionnement d'une machine-outil selon l'une quelconque des revendications précédentes, comprenant le calcul de la mesure de hauteur à intervalles de temps pendant le fonctionnement, et la régulation de l'agencement d'introduction sur la base de la mesure de hauteur calculée.

FIG. 1

FIG. 2

EP 3 334 562 B1

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6026549 A
- GB 2360475 A
- JP 2001179587 A
- GB 2321026 A
- US 20090271027 A
- EP 2463737 A